Europäisches Patentamt

European Patent Office

Office européen des brevets

(11) Publication number: **0 063 903**
**A1**

(12) # EUROPEAN PATENT APPLICATION

(21) Application number: **82301973.2**

(22) Date of filing: **16.04.82**

(51) Int. Cl.³: **A 01 G 9/10**

(30) Priority: **29.04.81 FI 811338**

(43) Date of publication of application: **03.11.82**
**Bulletin 82/44**

(84) Designated Contracting States: **AT BE CH DE FR IT LI LU NL SE**

(71) Applicant: **Farmos-Yhtymä Oy, P.O. Box 425, SF-20101 Turku 10 (FI)**

(72) Inventor: **Rannali, Pertti Kalevi, Maaherrankatu 29 B 21, SF-20200 Turka 29 (FI)**

(74) Representative: **Collier, Jeremy Austin Grey et al, J.A.Kemp & Co. 14, South Square Gray's Inn, London WC1R 5EU (GB)**

(54) **Growth substrate block.**

(57)   The growth substrate block, useful for the cultivation of plants, is prepared from essentially dry compressed peat (2) that expands when moistened while remaining intact. The block is produced by compression, the edges of the block being more forcibly compressed than the centre, except that the seed cavity (4) in the centre of the block may also be more forcibly compressed. The surface of the block which is uppermost in use is provided with a porous, flexible surface binding layer (1). Thus during compression of the block a porous, flexible sheet (1) e.g. of paper is pressed onto at least the surface of the peat súbstrate block. An especially favourable growth substrate block is made by forming it in layers (2), and also providing a binding supporting layer (1) between the layers of peat (2).

- 1 -

## DESCRIPTION

## "GROWTH SUBSTRATE BLOCK"


THIS INVENTION relates to growth substrate blocks, especially those made of peat.

Growth substrate blocks for the transplant cultivation of plants may be produced by compressing peat e.g. by the known essentially dry peat compression method described in Finnish Patent No. 53,979 and the Finnish Patent Application No. 79 3312, corresponding to British Specifications Nos. 1491940 and 2061905 respectively. These known growth substrate blocks are serviceable for their purpose; they take up little space in transportation, but once moistened in the place of use, they expand to their original condition before compression, while remaining, however, coherent. The inherent characteristics of peat, such as airiness, are preserved fundamentally unchanged.

One drawback to these known growth substrate blocks is, however, that they must be prepared from relatively high quality peat raw-materials, in order to perform the function demanded of them. Thus, the peat growth substrate blocks produced according to the Finnish Patent No. 53979 should be prepared from whole peat-slabs, and also in proceeding according to the process of Finnish Patent Application No. 79 3312, the growth substrate block is prepared from whole peat-slabs, so as to enable it to remain coherent. While the process of that application makes it possible to make useful growth substrate blocks from other peat raw-materials as well, e.g. from fine peat, in that case a relatively high compression-force must then be used on the peat, in particular on the peat block's edge in order to achieve a block that remains coherent. Alternatively, a layered peat structure can be used in which fine peat is placed between the whole peat-slabs.

In one type of commercially available product a small cylindrical block of compressed dry peat is placed inside a cylinder of plastic netting. When the peat is moistened and consequently expands, the netting expands also and serves to keep the peat block together. However the construction is not altogether satisfactory since the block tends to split if any attempt is made to make a hole in it, for example for the purpose of inserting a cutting. Moreover the plastic netting does not decompose when the block is placed in the soil.

A substantial improvement in keeping growth substrate blocks coherent after compression, e.g. in transportation, and especially after moistening, has now been achieved.

The new method is more particularly based upon the compression method described in the Finnish Patent Application No. 79 3312, in which growth substrate blocks are compressed from essentially dry peat raw-materials, the moisture content being under 35%, into blocks essentially separate from each other. The special feature of that compression method is that each peat block is compressed more forcibly at its edge than at its central area, an exception, however, being a small central area into which a seed cavity may usefully be pressed.

According to the present invention a growth substrate block which expands when moistened comprises essentially dry compressed peat, the edges of which, and optionally also a small central area, are compressed more than the rest of the block, at least the surface of the block which is uppermost in use being provided with a porous, flexible surface binding layer. The porous flexible binding layer, which binds the surface of the compressed growth substrate block very cohesively, may be pressed onto the growth substrate block, or at least onto

- 3 -

its upper surface, during manufacture. This extra surface layer has a very good binding effect on moistened and expanded growth substrate blocks, so it is possible to use as a material for the blocks peat of an essentially inferior quality than before, in order to achieve a similar result. Flexible paper such as creped paper has been shown to be suitable, but other fibrous, non-woven or similar materials can also be used successfully in the realization of the invention.

One form of construction which has been found favourable is one in which the peat-block is compressed as a layered product, in which a binding supporting layer is also used in binding the intermediate layers. With this growth substrate block structure, even growth substrate blocks suitable for cultivation of widely spaced plants have been produced from poorly cohesive peat material. On the other hand, peat substrate blocks on which a binding layer has been used only on the surface are suitable primarily for substrate cultivation, in other words for cultivation in which the growth substrate blocks are kept for the duration of the plants initial stage of growth, in readiness for a suitable cultivation substrate.

If creped paper, which has particularly good stretching ability in the creping direction, is used as an intermediate and surface binding substance, "paper eaves" are obtained at the two opposite edges of the layers in the moistened block. When the block is compressed, the paper follows, to a certain extent, the edges of the compression implements which exert a higher pressure at the edge of the peat block than elsewhere. For this reason, the compressed paper at the sides of the block does not recede into the block when moistened, but yields to such an extent that the opposite edges of the paper in the creping direction remain essentially in place. In blocks made of several layers, the effect of these "eaves"

- 4 -

can be emphasized still further by placing the paper in alternate layers crosswise in relation to the creping direction.

The invention is illustrated in more detail in the accompanying drawings, in which:

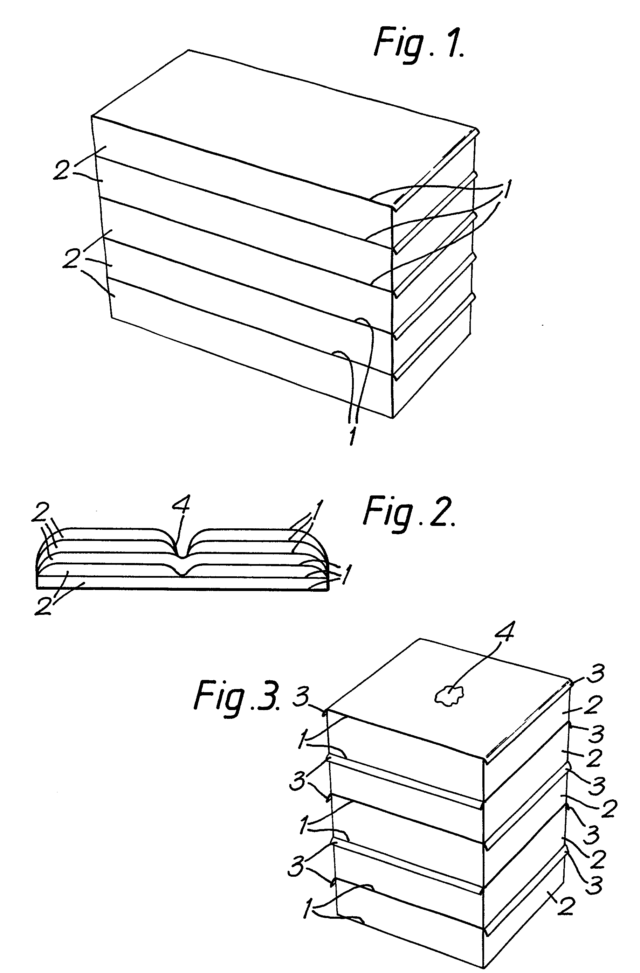

Figure 1 shows in diagrammatic cross-section layers of dry peat 2 between sheets of paper 1 before compression to produce a growth substrate block in accordance with the present invention;

Figure 2 shows a dry compressed peat block in accordance with the present invention. The compressed peat 2 is held between layers of paper 1. During the compression, a depression 4 has been made on the upper surface of the block. The edges of the block have been more highly compressed and are thus thinner than the remainder of the block.

Figure 3 shows the block of Figure 2 after moistening. Note that the edges of the paper sheets 1 protrude slightly from the block to form eaves 3. The depression 4 remains in the top of the block. In practice the height of the block after moistening is likely to be about 5½ to 6 times the height of the dry compressed block.

The supporting layer can be pressed onto the peat substrate block without obstructing the seed cavity in the central area, in exactly the same way as has been described in the above-mentioned Finnish Patent Application No. 79 3312.

Although single growth substrate blocks, which are naturally the usual basic unit, have been described, these growth substrate blocks are advantageously produced in larger slabs as described in Finnish Patent Application No. 79 3312. In so doing, several blocks are compressed at the same time in a chequered pattern, using suitable implements. Layered products may be made, e.g. by first spreading the substratum material of the growth substrate

- 5 -

block onto the compression base, on which is preferably placed a support sheet suitable for carrying the layered arrangement during compression. The substratum material is covered with a suitable paper or equivalent and peat from the intermediate layer, preferably fine peat, is spread on to the paper. The peat is then covered with a further sheet of paper, and additional intermediate layers are spread as required, all of which can be covered with paper. Finally, surface peat is spread onto the growth substrate blocks and is then covered with paper.

This layered arrangement on the support sheet is taken to the compressing implement where it is compressed with a suitable chequered pattern stamp into essentially separate growth substrate blocks.

It is within the scope of this invention to press a paper layer also onto the bottom of the growth substrate block, but its effect is not so great as that of the binding papers of the surface and intermediate layers.

- 6 -

CLAIMS

1. A growth substrate block, which expands when moistened, comprising essentially dry compressed peat, the edges of which, and optionally also a small central area, are compressed more than the rest of the block, at least the surface of the block which is uppermost in use being provided with a porous, flexible surface binding layer.

2. A growth substrate block according to claim 1, formed from two or more compressed layers of peat, and having a porous flexible binding layer between each pair of adjacent layers of peat, in addition to the surface binding layer.

3. A growth substrate block according to claim 1 or 2, in which at least one porous flexible binding layer is of paper or other non-woven sheet material.

4. A growth substrate according to claim 3, comprising at least two flexible binding layers of crepe paper, the creping direction of the layers being arranged alternately crosswise.

5. A growth substrate block substantially as hereinbefore described.

Fig. 1.

Fig. 2.

Fig. 3.

European Patent
Office

**EUROPEAN SEARCH REPORT**

0063903
Application number

EP 82 30 1973.2

## DOCUMENTS CONSIDERED TO BE RELEVANT

| Category | Citation of document with indication, where appropriate, of relevant passages | Relevant to claim |
|---|---|---|
| D,A | GB - A - 1 491 940 (TARVAS-REHU OY) <br> * page 2, lines 4 to 35 * | 1 |
| D,P, <br> A | GB - A - 2 061 905 (FARMOS-YHTYMA OY) <br> * page 2, lines 29 to 93; fig. 1 * | 1 |
| A | DE - A - 2 251 566 (O. MELVOLD) <br> * page 2; fig. 1 to 4 * <br> & US - A - 3 883 989 | 1 |
| A | DE - A1 - 2 655 287 (W. MIELKE) | |

**CLASSIFICATION OF THE APPLICATION (Int. Cl. 3)**

A 01 G 9/10

**TECHNICAL FIELDS SEARCHED (Int.Cl. 3)**

A 01 C 1/04

A 01 G 9/10

C 05 F 11/02

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 22-06-1982 | SCHOFER |

EPO Form 1503.1 06.78